# EUROPÄISCHE PATENTSCHRIFT

(11) **EP 1 045 523 B1**
(45) Veröffentlichungstag und Bekanntmachung des Hinweises auf die Patenterteilung: **17.09.2008**
(21) Anmeldenummer: 00105262.0
(22) Anmeldetag: 14.03.2000
(51) Int. Cl.: H04B 1/08

(54) **Einbaugerät eines Autoradios**
Mounting device for a car radio
Disposotif pour monter un radio véhiculaire

(30) Priorität: 14.04.1999 DE 19916744
(43) Veröffentlichungstag der Anmeldung: 18.10.2000
(73) Patentinhaber: SIEMENS AKTIENGESELLSCHAFT, 80333 München (DE)
(72) Erfinder: Yeo Wee Kiang, David, Singapore 570191 (SG)

(56) Entgegenhaltungen:
- EP-A- 0 658 011
- EP-A- 0 830 828
- DE-A- 4 035 551
- DE-A- 4 118 296
- US-A- 5 449 228
- US-A- 5 510 957

## Beschreibung

Die Erfindung betrifft ein Einbaugerät, insbesondere Autoradio, mit einem lösbar daran befestigten Bedienteil, welches durch eine manuell lösbare Rasteinrichtung in Bedienstellung gehalten und durch eine Feder in Richtung einer Entnahmestellung vorgespannt ist, so dass das Bedienteil nach Lösen der Rasteinrichtung selbsttätig in die Entnahmestellung gelangt.

Bei verschiedenen Einbaugeräten eines Kraftfahrzeugs, insbesondere bei Autoradios, besteht eine erhöhte Gefahr des Diebstahls. Deshalb werden seit längerer Zeit Autoradios oftmals so ausgebildet, dass man sie bei Nichtgebrauch des Kraftfahrzeugs einer Halterung entnehmen und dadurch mitführen kann. Dadurch ergibt sich zwar ein voller Diebstahlschutz, jedoch ist das Mitnehmen eines kompletten Radios mühsam und wird deshalb häufig unterlassen. In jüngster Zeit hat man damit begonnen, den Bedienteil vom übrigen Radio abtrennbar auszubilden, so dass man beim Verlassen des Kraftfahrzeugs statt das komplette Radio nur das Bedienteil entnehmen und mitführen muss. Beim Trennen des Bedienteils vom Radio besteht die Gefahr, dass das Bedienteil vollständig vom Radio gelöst wird, bevor der Benutzer es ergriffen hat, so dass es zu Boden fällt. Die bisher bekanntgewordenen Mittel zum Halten des Bedienteils in seiner Entnahmestellung sind jedoch recht aufwendig und dadurch teuer in der Herstellung.

Aus der EP 0 658 011 A1 ist ein Einbaugerät mit einem Halteteil und an einem Seitenbereich eines Halteteils angeordneten Halteöffnungen bekannt, in die entsprechende Halteansätze des Bedienteils eingreifbar sind, wodurch das Bedienteil schwenkbar gelagert ist. An der den Halteöffnungen gegenüberliegenden Seite besitzt das Halteteil einen Fanghaken, der in eine entsprechende Haltenase am Bedienteil in dessen Bedienstellung hintergreift und das Bedienteil in seiner Bedienstellung hält.

Aus der DE 41 18 296 A1 ist ein Einbaugerät bekannt, das weitgehend dem Oberbegriff des Anspruchs 1 entspricht. Dabei ist an einem Seitenbereich eines Halteteils ein Aufnahmeschuh schwenkbar gelagert, in den das Bedienteil einführbar und mit dem Aufnahmeschuh in seine Bedienstellung schwenkbar ist. In dieser Bedienstellung überrastet eine Halteklaue das Bedienteil und hält es in seiner Bedienstellung.

Aus der EP-A-0 830 828 ist es bekannt eine Drehachse durch fluchtende Achsstummel auszubilden.

Aus der US 5,510,957 A und der US 5,449,228 A sind Einbaugeräte mit einem lösbar daran befestigten Bedienteil bekannt, wobei die Bedienteile durch eine manuell lösbare Rasteinrichtung in Bedienstellung gehalten und durch eine Feder in Richtung einer Entnahmestellung vorgespannt sind, so dass das Bedienteil nach Lösen der Rasteinrichtung selbsttätig in die Entnahmestellung gelangt. Hierbei weist das Einbaugerät jeweils einen gegen das Bedienteil mit Vorspannung anliegenden Fanghaken auf und das Bedienteil einen in Entnahmestellung des Bedienteils einen von dem Fanghaken gehaltenen Rastvorsprung. Die letzt genannte Schrift weist eine horizontal verlaufende Schwenkachse auf, um die das Bedienteil schwenkbar gelagert ist.

Der Erfindung liegt das Problem zugrunde, ein Einbaugerät der eingangs genannten Art so auszubilden, dass sein Bedienteil nach dem Trennen von dem Einbaugerät auf möglichst einfache Weise in einer bequem zu erreichenden Entnahmestellung gehalten wird.

Dieses Problem wird erfindungsgemäß dadurch gelöst, dass das Einbaugerät einen gegen das Bedienteil mit Vorspannung in die Entnahmestellung anliegenden Fanghaken hat und dass das Bedienteil einen in der Entnahmestellung des Bedienteils von dem Fanghaken gehaltenen Rastvorsprung aufweist.

Durch diese Gestaltung wird das Bedienteil nach dem Lösen der Rasteinrichtung durch ein einziges Bauteil, nämlich durch den Fanghaken, in der Entnahmestellung gehalten. Dadurch sind die Mittel zum Halten des Bedienteils in der Entnahmestellung sehr einfach ausgebildet und können deshalb kostengünstig hergestellt werden. Zugleich ist das Entnehmen des Bedienteiles sehr einfach, zumal ein Benutzer auf Anhieb die Funktionsweise des Fanghakens zu erkennen vermag. Dank der Erfindung wird mittels des Fanghakens ein unbeabsichtigtes Herunterfallen des Bedienteils auf einfache Weise verhindert.

Ganz besonders einfach ist das Einbaugerät ausgebildet, wenn gemäß einer vorteilhaften Weiterbildung der Erfindung das Bedienteil in einem Halterahmen um eine nahe der unteren Seite des Halterahmens horizontal verlaufende Schwenkachse schwenkbar gehalten ist und an seiner Unterseite zwei seitliche Ausnehmungen zum Übergreifen der Schwenkachse aufweist. Bei einer solchen Ausführungsform kann man das Bedienteil einfach von oben her auf die Schwenkachse aufschieben und dann durch eine Klappbewegung auf der Schwenkachse in die Bedienstellung bringen, in der die Rasteinrichtung das Bedienteil festhält. Auf ebenso einfache Weise kann man das Bedienteil von der Schwenkachse abziehen, wenn die Rasteinrichtung das Bedienteil freigegeben und es sich in die durch den Fanghaken begrenzte Entnahmestellung verschwenkt hat.

Zur weiteren Vereinfachung trägt es bei, wenn gemäß einer anderen Weiterbildung der Erfindung der Fanghaken an dem Halterahmen um eine Fanghakenachse schwenkbar befestigt ist. Hierdurch wird es möglich, den Halterahmen mit der Rasteinrichtung und dem Fanghaken als eine Baueinheit auszubilden, die dann komplett mit einem Einbaugerät verbunden wird.

Zum Vorspannen des Bedienteils könnte man am Halterahmen eine Druckfeder anordnen, welche sich am Halterahmen und dem Bedienteil abstützt. Besonders einfach ist die Vorspannung des Bedienteils in Richtung seiner Entnahmestellung zu verwirklichen, wenn der Fanghaken durch eine auf der Fanghakenachse gehaltene Schenkelfeder zum Bedienteil hin vorgespannt ist.

Die Schwenkachse ist einfach ausgebildet, wenn sie durch zwei zueinander fluchtende Achsstummel gebildet ist, welche jeweils nahe eines freien Endes eines vom Halterahmen zur Seite des Bedienteils hin vorspringenden Tragarmes befestigt sind.

Die Mittel zum Verrasten des Bedienteils in seiner Entnahmestellung können sehr einfach gestaltet sein, wenn gemäß einer anderen Weiterbildung der Erfindung das Bedienteil auf seiner dem Halterahmen zugewandten Seite eine Ausnehmung aufweist, in welche der Fanghaken eingreift und wenn der Rastvorsprung durch einen von unten her teilweise über die Aushöhlung greifenden Wandbereich gebildet ist.

Zum Lösen der Rasteinrichtung kann man unterschiedliche, im Stand der Technik vorhandene Mittel einsetzen. Eine besonders bequem zu betätigende Ausführung besteht darin, dass zum Lösen der Rasteinrichtung an dem Bedienteil eine Drucktaste vorgesehen ist.

Die Erfindung lässt verschiedene Ausführungsformen zu. Eine davon ist in der Zeichnung dargestellt und wird nachfolgend beschrieben. Diese zeigt in
- Fig.1: eine perspektivische Ansicht eines von einem Halterahmen gehaltenen Bedienteils eines Einbaugerätes in Bedienstellung,
- Fig.2: die Anordnung nach Figur 1 in Entnahmestellung des Bedienteils,
- Fig.3: die Anordnung nach den Figuren 1 und 2 bei soeben herausgezogenem Bedienteil,
- Fig.4: eine Seitenansicht der Anordnung nach Fig.2,
- Fig.5: einen Querschnitt durch die Anordnung nach den vorangehenden Figuren, wobei das Bedienteil sich in Bedienstellung befindet,
- Fig.6: einen Querschnitt durch die Anordnung nach den vorangehenden Figuren, wobei das Bedienteil sich in Entnahmestellung befindet.

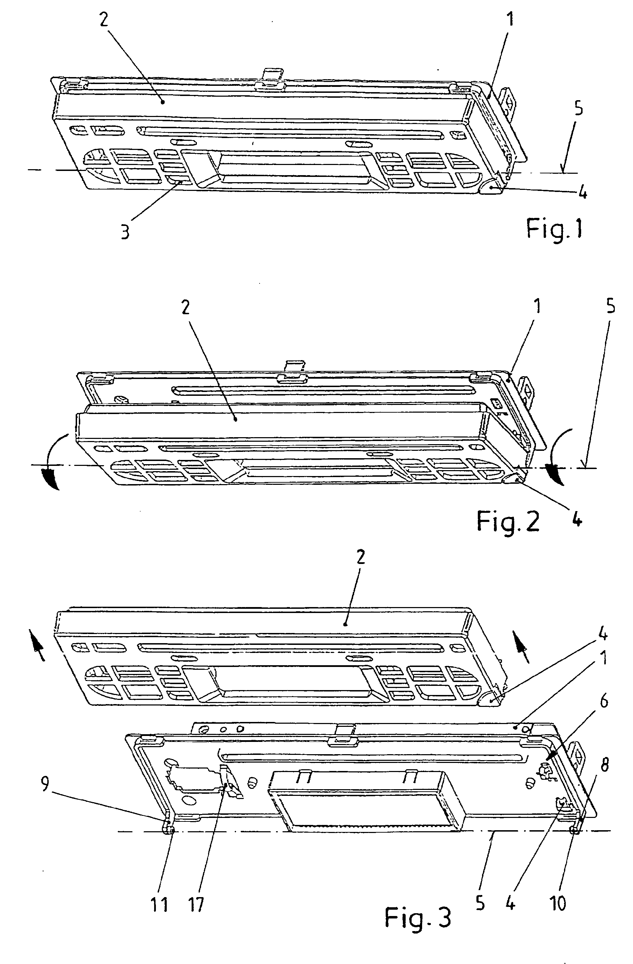

Die Figur 1 zeigt einen Halterahmen 1, welcher an der Vorderseite eines nicht gezeigten Einbaugerätes, insbesondere eines Autoradios, dauerhaft zu befestigen ist. Der Halterahmen 1 trägt ein Bedienteil 2, welches zur Bedienung des Einbaugerätes Tasten 3 aufweist und sich in Figur 1 in Bedienstellung befindet. In der rechten unteren Ecke des Bedienteils 2 erkennt man eine Drucktaste 4. Drückt man diese nieder, dann schwenkt das Bedienteil 2 um eine horizontale Schwenkachse 5, so dass der obere Bereich des Bedienteils 2 von dem Halterahmen 1 freikommt und das Bedienteil 2 in eine Entnahmestellung gelangt.

Die Figur 2 zeigt diese Entnahmestellung. Zu erkennen ist, dass der obere Bereich des Bedienteils 2 Abstand von dem Halterahmen 1 hat, so dass man das Bedienteil 2 von oben her greifen und von der Schwenkachse 5 abheben kann.

Die Figur 3 lässt die Gestaltung des Halterahmens 1 detailliert erkennen. Die Drucktaste 4 ist Teil einer Rasteinrichtung 6, welche das Bedienteil 2 festhält, wenn dieses gegen den Halterahmen 1 gedrückt wird und die das Bedienteil 2 freigibt, wenn man auf die Drucktaste 4 drückt. Ebenso zu erkennen ist in Figur 3 ein Fanghaken 7, der auf noch zu erläuternde Weise das Bedienteil 2 in der in Figur 2 gezeigten Entnahmestellung festhält. Der Halterahmen 1 hat jeweils im unteren Bereich seiner beiden Schmalseiten einen Tragarm 8, 9 mit einem Achsstummel 10, 11. Die beiden Achsstummel 10, 11 fluchten zueinander und sind aufeinander gerichtet. Sie bilden zusammen die Schwenkachse 5.

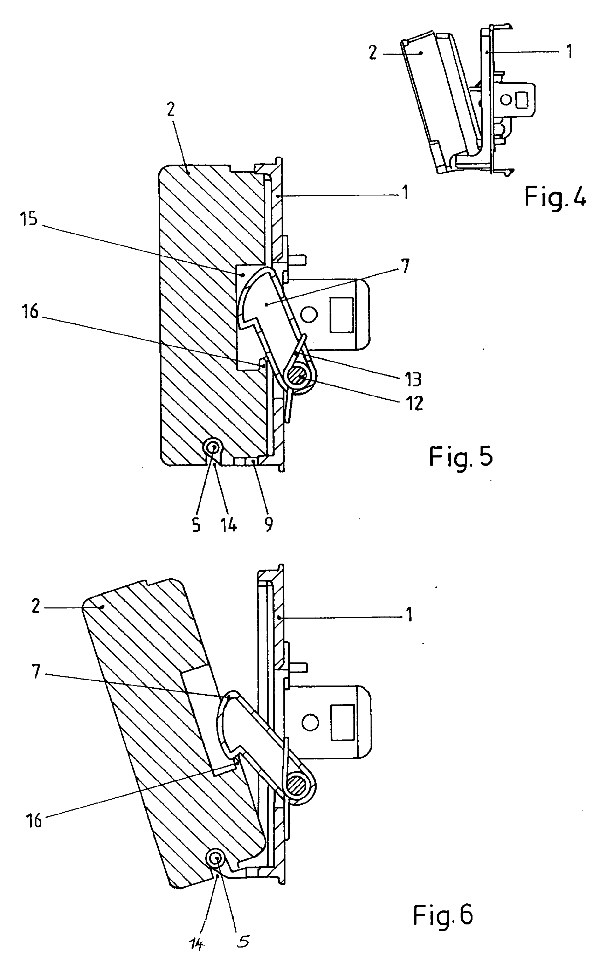

Die Figur 4 dient lediglich der Verdeutlichung der zuvor erläuterten Gestaltung. Zu sehen ist dort das Bedienteil 2 in der nach vorn geschwenkten Entnahmestellung, in der es oben Abstand vom Halterahmen 1 hat.

In der Schnittdarstellung gemäß Figur 5 sind der Halterahmen 1 und das Bedienteil 2 gegenüber den vorangehenden Figuren vergrößert dargestellt. Deshalb erkennt man den Fanghaken 7 besonders deutlich. Dieser Fanghaken 7 wird durch eine Fanghakenachse 12 schwenkbar auf dem Halterahmen 1 gehalten. Eine Schenkelfeder 13 spannt den Fanghaken 7 zum Halterahmen 1 hin vor. Ebenfalls zu erkennen ist in Figur 5 der Tragarm 9 mit der Schwenkachse 5, die in eine nach unten hin offene Ausnehmung 14 des Bedienteils 2 eingreift. Das Bedienteil 2 ist auf der nicht zu sehenden, gegenüberliegenden Seite entsprechend mit einer Ausnehmung versehen. Dadurch kann man das Bedienteil 2 nach oben hin von der Schwenkachse 5 abziehen.

Wie die Figur 5 weiterhin zeigt, hat das Bedienteil 2 in seiner dem Halterahmen 1 zugewandten Seite eine Aushöhlung 15 mit einem Rastvorsprung 16, der durch einen von unten her teilweise über die Aushöhlung 15 greifenden Wandbereich gebildet ist.

In der in Figur 5 gezeigten Bedienstellung des Bedienteils 2 drückt der Fanghaken 7 aufgrund der Federkraft der Schenkelfeder 13 gegen den Rastvorsprung 16 und spannt das Bedienteil 2 deshalb in eine von dem Halterahmen 1 weg weisende Richtung vor. Die in Figur 3 gezeigte Rasteinrichtung 6 hindert das Bedienteil 2 jedoch daran, von dem Halterahmen 1 freizukommen. Drückt man auf die Drucktaste 4, dann gibt die Rasteinrichtung 6 das Bedienteil 2 frei. Der Fanghaken 7 drückt dann das Bedienteil 2 in Figur 5 gesehen nach links, so dass es sich um die Schwenkachse 5 verschwenkt und in die in Figur 6 gezeigte Entnahmestellung gelangt. Diese Entnahmestellung wird dadurch festgelegt, dass der Fanghaken 7 am Rastvorsprung 16 einhakt und dadurch das Bedienteil 2 festhält. Die Ausnehmungen 14 ermöglichen es, das Bedienteil 2 schräg nach oben hin vom Halterahmen 1 zu lösen und es bei erneutem Gebrauch entsprechend wieder in den Halterahmen 1 einzusetzen und durch eine anschließende Schwenkbewegung in die in Figur 5 gezeigte Bedienstellung zu bringen.

## Patentansprüche

1. Einbaugerät, insbesondere Autoradio, mit einem lösbar daran befestigten Bedienteil (2), welches durch eine manuell lösbare Rasteinrichtung (6) in Bedienstellung gehalten und in der Bedienstellung durch eine Feder in Richtung einer Entnahmestellung vorgespannt ist, so dass das Bedienteil (2) nach Lösen der Rasteinrichtung (6) selbsttätig in die Entnahmestellung gelangt, wobei das Einbaugerät einen gegen das Bedienteil (2) mit Vorspannung in die Entnahmestellung anliegenden Fanghaken (7) hat und dass das Bedienteil (2) einen in der Entnahmestellung des Bedienteils (2) von dem Fanghaken (7) gehaltenen Rastvorsprung (16) aufweist.

2. Einbaugerät nach Anspruch 1, **dadurch gekennzeichnet, dass** das Bedienteil (2) in einem Halterahmen (1) um eine nahe der unteren Seite des Halterahmens (1) horizontal verlaufende Schwenkachse (5) schwenkbar gehalten ist und an seiner Unterseite zwei seitliche Ausnehmungen (14) zum Übergreifen der Schwenkachse (5) aufweist.

3. Einbaugerät nach Anspruch 2, **dadurch gekennzeichnet, dass** der Fanghaken (7) an dem Halterahmen (1) um eine Fanghakenachse (12) schwenkbar befestigt ist.

4. Einbaugerät nach zumindest einem der vorangehenden Ansprüche, **dadurch gekennzeichnet, dass** der Fanghaken (7) durch eine auf der Fanghakenachse (12) gehaltene Schenkelfeder (13) zum Bedienteil (2) hin vorgespannt ist.

5. Einbaugerät nach zumindest einem der vorangehenden Ansprüche, **dadurch gekennzeichnet, dass** die Schwenkachse (5) des Halterahmens (1) durch zwei zueinander fluchtende Achsstummel (10, 11) gebildet ist, welche jeweils nahe eines freien Endes eines vom Halterahmen (1) zur Seite des Bedienteils (2) hin vorspringenden Tragarmes (8, 9) befestigt sind.

6. Einbaugerät nach zumindest einem der vorangehenden Ansprüche, **dadurch gekennzeichnet, dass** das Bedienteil (2) auf seiner dem Halterahmen (1) zugewandten Seite eine Aushöhlung (15) aufweist, in welche der Fanghaken (7) eingreift und dass der Rastvorsprung (16) durch einen von unten her teilweise über die Aushöhlung (15) greifenden Wandbereich gebildet ist.

7. Einbaugerät nach zumindest einem der vorangehenden Ansprüche, **dadurch gekennzeichnet, dass** zum Lösen der Rasteinrichtung (6) an dem Bedienteil (2) eine Drucktaste (4) vorgesehen ist.

## Claims

1. Built-in appliance, in particular an automobile radio, with an operating part (2) which is releasably fastened to it and which is held in the operating position by a manually releasable detent device (6) and is prestressed in the operating position by a spring in the direction of an extraction position, so that the operating part (2) automatically assumes the extraction position after the detent device (6) has been released, the built-in appliance having a catch hook (7) bearing in the extraction position with prestress against the operating part (2), and that the operating part (2) having a detent projection held by the catch hook (7) when the operating part (2) is in the extraction position.

2. Built-in appliance according to Claim 1, wherein the operating part (2) is held in a holding frame (1) so as to be pivotable about a pivot axle (5) running horizontally near the lower side of the holding frame (1) and has, on its underside, two lateral recesses (14) for engaging over the pivot axle (5).

3. Built-in appliance according to Claim 2, wherein the catch hook (7) is fastened to the holding frame (1) so as to be pivotable about a catch hook axle (12).

4. Built-in appliance according to at least one of the preceding claims, wherein the catch hook (7) is prestressed toward the operating part (2) by a leg spring (13) held on the catch hook axle (12).

5. Built-in appliance according to at least one of the preceding claims, wherein the pivot axle (5) of the holding frame (1) is formed by two axle stubs (10, 11) which are aligned with one another and which are fastened in each case near a free end of a supporting arm (8, 9) projecting from the holding frame (1) toward the side of the operating part (2).

6. Built-in appliance according to at least one of the preceding claims, wherein the operating part (2) has, on its side facing the holding frame (1), a cavity (15), into which the catch hook (7) engages, and wherein the detent projection (16) is formed by a wall region extending partly over the cavity (15) from below.

7. Built-in appliance according to at least one of the preceding claims, wherein a pushbutton (4) is provided on the operating part (2) in order to release the detent device (6).

## Revendications

1. Appareil encastrable, notamment poste autoradio, comportant une platine de commande (2), qui y est fixée d'une façon amovible et qui est maintenue en position de commande par un dispositif à encliquetage (6) pouvant être dégagé manuellement et qui est soumise par un ressort, dans la position de commande, à une force de précontrainte dans la direction d'une position de retrait, si bien que la platine de commande (2), après le déblocage du dispositif à encliquetage (6), parvient automatiquement dans la position de retrait, où l'appareil encastrable comporte un crochet de rattrapage appliqué, dans la position de retrait, avec une précontrainte contre la platine de commande (2) et où la platine de commande (2) comporte une avancée d'arrêt (16) retenue par le crochet de rattrapage (7) dans la position de retrait de la platine de commande (2).

2. Appareil encastrable selon la revendication 1, **caractérisé par le fait que** la platine de commande (2) est maintenue dans un cadre de support (1), en pivotement autour d'un axe (5) monté horizontalement à proximité de l'arête inférieure du cadre de support (1), et comporte, sur sa face inférieure, deux évidements latéraux (14) permettant un dépassement de l'axe de pivotement (5).

3. Appareil encastrable selon la revendication 2, **caractérisé par le fait que** le crochet de rattrapage (7) est fixé au cadre de support (1), en pivotement autour d'un axe (12) du crochet de rattrapage.

4. Appareil encastrable selon au moins l'une des revendications précédentes, **caractérisé par le fait que** le crochet de rattrapage (7) est soumis à une force de précontrainte vers la platine de commande (2) par un ressort à branches (13) maintenu sur l'axe (12) du crochet de rattrapage.

5. Appareil encastrable selon au moins l'une des revendications précédentes, **caractérisé par le fait que** l'axe de pivotement (5) du cadre de support (1) est formé par deux tronçons d'axes (10, 11) en alignement l'un sur l'autre, qui sont chacun fixés près d'une extrémité libre d'un bras porteur (8, 9) dépassant du cadre de support (1) sur le côté de la platine de commande (2).

6. Appareil encastrable selon au moins l'une des revendications précédentes, **caractérisé par le fait que** la platine de commande (2) comporte, sur son côté tourné vers le cadre de support (1), un creux (15) dans lequel s'introduit le crochet de rattrapage (7) et que l'avancée d'arrêt (16) est formée par une partie de la paroi qui s'engage par le bas partiellement au-dessus du creux (15).

7. Appareil encastrable selon au moins l'une des revendications précédentes, **caractérisé par le fait que**, pour débloquer le dispositif à encliquetage (6), il est prévu une touche à poussoir (4) sur la platine de commande (2).
